# EUROPEAN PATENT SPECIFICATION

(11) **EP 1 157 614 B1**
(45) Date of publication and mention of the grant of the patent: **12.09.2007**
(21) Application number: 01304426.8
(22) Date of filing: 18.05.2001
(51) Int. Cl.: A23G 3/00, A21D 13/08, A21D 13/00, A21D 15/02

(54) **Food product kit**
Nahrungsmittelsatz
Aliment en kit

(30) Priority: 22.05.2000 GB 0012282
(43) Date of publication of application: 28.11.2001
(73) Proprietor: Wilson, Timothy John Ratcliffe, Silsden, Keighley, BD20 9AA (GB); Wilson, Elizabeth A., Silsden, Keighley BD20 9AA (GB)
(72) Inventor: Wilson, Timothy John Ratcliffe, Silsden, Keighley, BD20 9AA (GB); Wilson, Elizabeth A., Silsden, Keighley BD20 9AA (GB)
(74) Representative: Wood, Graham

(56) References cited:
- WO-A-00/02458
- WO-A-00/13520
- WO-A-89/05764
- DE-A- 3 334 231
- DE-A- 4 305 752
- DE-U- 29 805 715
- DE-U- 29 916 088
- JP-A- 58 195 576
- US-A- 5 928 050
- PATENT ABSTRACTS OF JAPAN vol. 1997, no. 06, 30 June 1997 (1997-06-30) -& JP 09 038346 A (TSUNEMATSU KASHIHO:KK), 10 February 1997 (1997-02-10)
- DATABASE WPI Section Ch, Week 199807 Derwent Publications Ltd., London, GB; Class D13, AN 1998-075144 XP002242758 & NZ 328 139 A (GRATKOWSKI S R), 24 October 1997 (1997-10-24)
- PATENT ABSTRACTS OF JAPAN vol. 1996, no. 05, 31 May 1996 (1996-05-31) -& JP 08 023886 A (TOSHIO IMANAKA), 30 January 1996 (1996-01-30)

## Description

This invention relates to a food product kit, typically, but not necessarily exclusively, including frozen food products, for producing a food product and to the component parts of the kit.

Conventionally, ice cream and other frozen food products, are purchased in tubs and containers and are stored by the user in a freezer until the product is required for consumption. When the ice cream or other product is to be consumed, the user scoops a certain quantity of the same from the tub or container and places it in a bowl, a cornet or similar.

Disadvantages associated with the conventional methods of providing ice cream for consumption is that the ice cream is typically frozen solid when removed from the freezer, and the user may have to allow the same to thaw slightly before the ice-cream can easily be removed from the container. If not all of the ice cream is to be consumed at a particular time then thawing and re-freezing of the same can result in a loss of quality of the ice cream, which is undesirable. In addition, once the ice cream is scooped out of the container there is very little which can be done to make the same look presentable for consumption as a dessert at a dinner party or, if so, the ice cream will have at least partially melted prior to consumption.

Some forms of ready made ice cream desserts are known in the art but these desserts are formed in the form for consumption prior to purchase and in many instances may be too large or too small for the number of people the product is to be eaten by at anyone serving of the product. If the ice cream dessert is too large for the number of consumers at any one serving then the dessert has to be either refrozen, which can result in loss of quality of the product, or the remainder of the dessert is thrown away, which is wasteful. In addition, it is likely that a consumer can identify a ready made dessert when the same is served to them due to the limited number of such desserts available. This can be undesirable, for example, to a host of a dinner party who may want to give the impression that they have made the dessert themselves and thus be embarrassed when a guest realises the dessert has been bought ready made. However, many people have very busy and time pressured lives and do not have the time and/or ability to produce a homemade dessert or food component.

WO00/02458 discloses a frozen confection food product in which an elongate length of frozen food can be combined with a bakery product in a form similar to a hot dog. However, as the frozen food product is of an elongate shape the combination of components to form products is limited. Furthermore the frozen and bakery products are required to be stored and handled separately due to the different storage requirements in the patent application.

It is therefore an object of the present invention to provide a means to enable a user to easily and quickly make a frozen food based product which can be arranged to produce a plurality of possible product configurations. The end product having a distinctive professional appearance but which appearance can be generated by the purchaser of the product.

It is a further object of the present invention to provide a means to enable a user to easily prepare a frozen food based product which requires no skill or training.

It is a further object of the present invention to provide a means to enable a user to easily and quickly obtain a required portion of a frozen food based product from a container, such that the remaining frozen product in the container, which is not consumed at that particular time, does not defrost and become damaged.

According to a first aspect of the present invention there is provided a kit for producing a user assembled food product and wherein the kit includes a plurality of shaped frozen food components and at least one bakery produce component, a plurality of said frozen food components shaped such that a number of said components can be selected by the user and configured in combination with said at least one bakery produce component to form a portion of the food product, characterised in that the kit is provided as a retail package in the form of a container having a number of separate compartments with different food components and/or food component shapes therein and at least one of the compartments is removable so as to allow defrosting of certain food components prior to consumption such that the components can be consumed at different temperatures or in different conditions.

In one embodiment the plurality of shaped frozen food components include at least one ice cream based component and/or a sorbet and/or a frozen yoghurt and/or other frozen material based component.

Typically, each kit includes a number of components, split into groups of components of the same shape. In one embodiment each kit is provided to be purchased to allow one product portion to be provided in a number of different user selectable and assembly configurations. Alternatively the kit can comprise a greater number of components and can allow the user to assemble a number of product portions, each with the same configuration, thereby allowing the user to provide a number of the assembled product portions for, for example, a dinner party.

The at least one bakery product can include any or any combination of, sponge based products, biscuits, pastries, meringues and/or the like.

In one embodiment one or more sauces are provided with the kit to allow a user to pour the same onto the product configuration in a user defined pattern.

In a further embodiment fruit is provided with or added to the kit which can be added to the product configuration.

It will be understood by a person skilled in the art that any combination of the above food components can be provided to interlink with the shaped frozen food components to produce a product configuration.

Typically the separate compartments can be frozen together and then one or more compartments can be removed if the same need to be defrosted prior to the formation of the product configuration with the shaped frozen food components. Alternatively, the separate compartments of the kit can be stored separately such that part of the kit is frozen during storage and the remaining part is stored at a higher temperature.

The ice cream shapes can be produced by an extrusion process, by stamping or by any other conventional forming method.

An advantage of the kit according to the present invention is that the one or more shaped frozen food components can each be easily removed from the container in which they are stored, thereby allowing the user to easily and quickly remove the exact quantity of the frozen product that they require without any remaining frozen product in the container thawing out and becoming damaged.

A further advantage of the kit according to the present invention is that a user can quickly and easily assemble an aesthetically appealing food product configuration including one or more shaped frozen food components. The user requires no training and no cooking or food preparation ability to assemble the product configuration.

A yet further advantage of the kit according to the present invention is that a user using the same number of shaped frozen food components can produce a plurality of different aesthetically appealing product configurations, thereby enabling a similar kit to be used a number of times to produce different product configurations. For example, the kit can be assembled for use at a child's party to make certain objects, such as a car, train, or cartoon character. The kit can also include an indication and instructions for forming a number of different product configurations.

Typically at least two of the component types are relatively solid and shaped.

Embodiments of the invention will now be described with reference to the accompanying Figures wherein:
Figures 1A and B illustrate two alternative kit packages;
Figure 2 is a schematic representation of a product configuration of the assembled kit in one possible embodiment;
Figure 3 is a schematic representation of a product configuration of the assembled kit in a further possible embodiment; and
Figure 4 is a schematic representation of a product configuration of the assembled kit in a yet further embodiment.

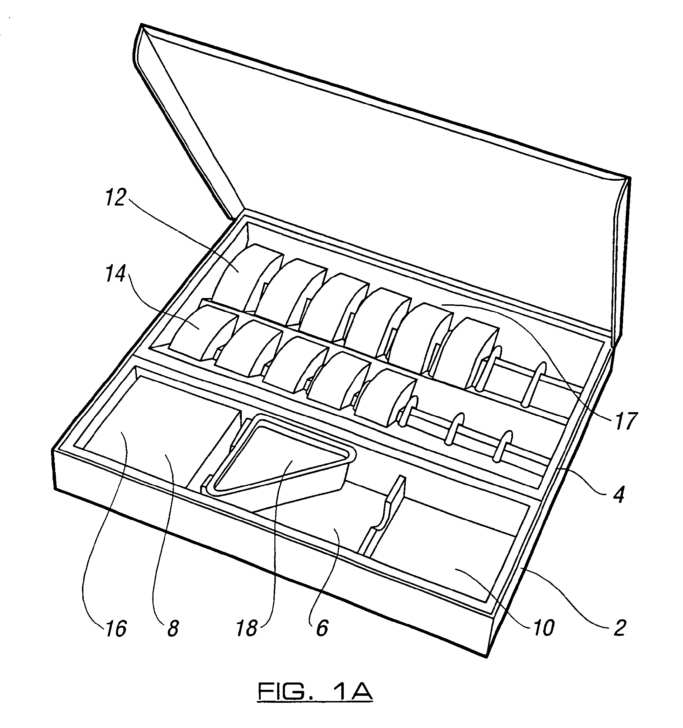

Referring firstly to Figures 1A, there is illustrated a container 2 for packaging a kit of food components in accordance wit hthe invention. The container 2 is divided into a plurality of compartments 4, 6, 8 and 10 to separate a plurality of different food product components.

Compartment 4 contains a plurality of frozen ice cream shapes 12 and 14, each shape individually arranged within the compartment to enable a user to access the same easily without the shapes being frozen together. Ice cream shapes 12 and 14 can if required be different flavours of ice cream and are held within a tray 15 which can be placed in the container with the components 12, 14 frozen and covered with a protective film 17, shown partly removed to allow the previous removal of some of the components 12, 14.

Compartment 8 contains a sponge based bakery product 16 and compartments 6 and 10 can contain sauces, in this case sauce 18 in a tray.

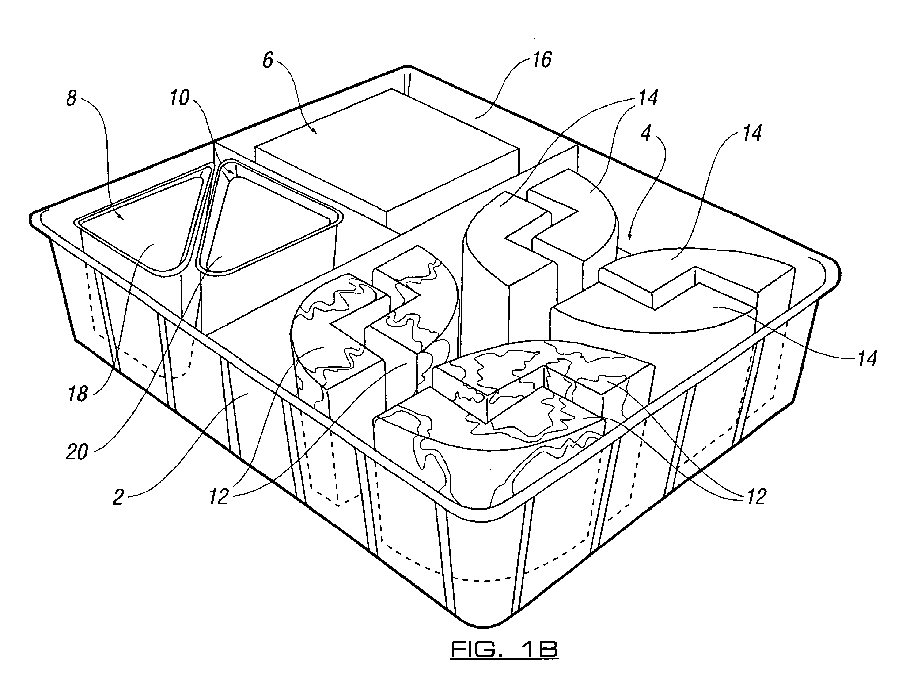

Figure 1B illustrates an alternative layout of package using the same reference numerals as with Figure 1A with the exception of an additional sauce tray 20.

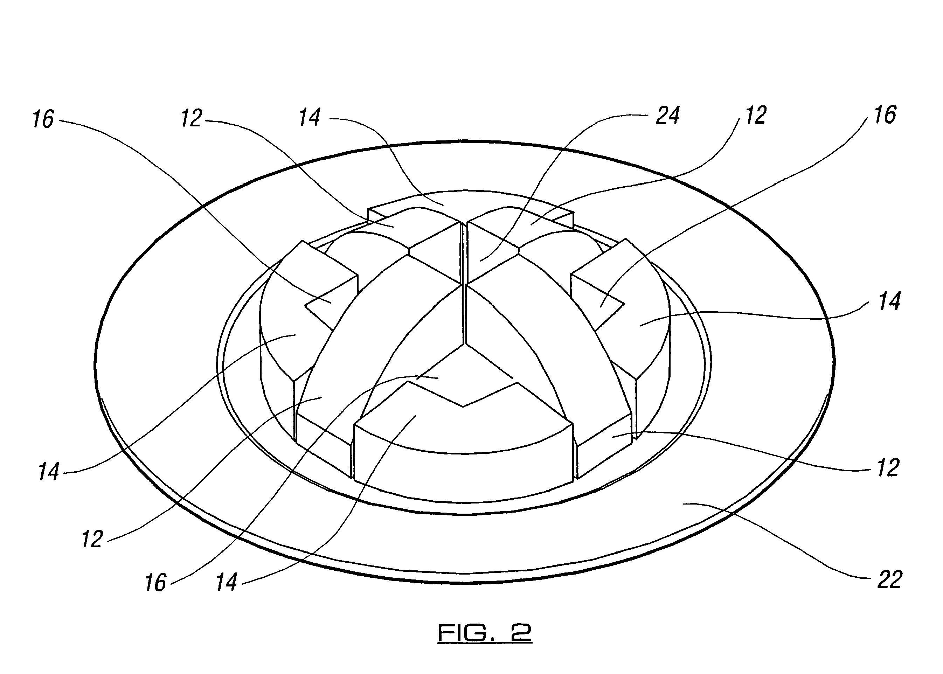

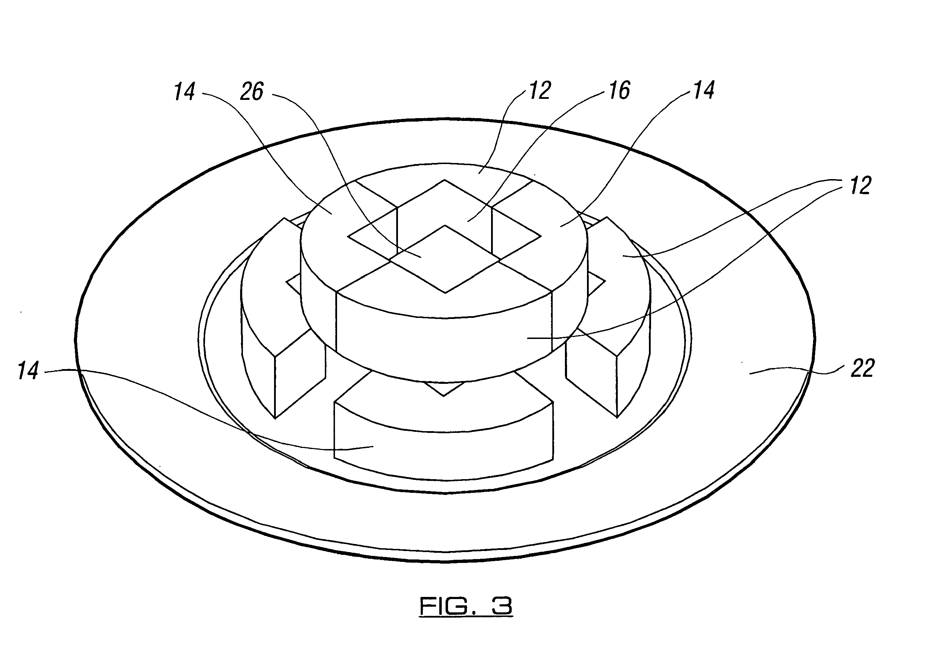

Referring to Figures 2 and 3, there are illustrated two different possible product portion configurations of the food components of Figures 1A or B assembled together to produce novel and aesthetically appealing ice cream desserts. In Figure 2, the ice cream components 14 are arranged on plate 22 to form the four corners of a product portion configuration. The ice cream components 12 are arranged between the components 14 and project inwardly of the product configuration and abut other components 14 in the central portion 24 of the product configuration. The sponge based product 16 is divided into 4 substantially equal parts and these parts are placed in the square gaps defined by the right angle of components 14 and edges of components 12. The sauce or sauces 18 and/or 20 can be poured into the central portion 24 and/or on other parts of the design as desired by the user. The food product portion can then be presented for consumption.

In Figure 3, the same ice cream components 12 and 14 are alternately arranged to produce a product portion configuration comprising an outer segmented circle and an inner circle located on top of the outer segmented circle. The sponge based product 16 is located in a central portion 26 of the inner circle. The sauces 18 and 20 can be provided in the central portion 26 and/or poured on the design in a user-defined pattern.

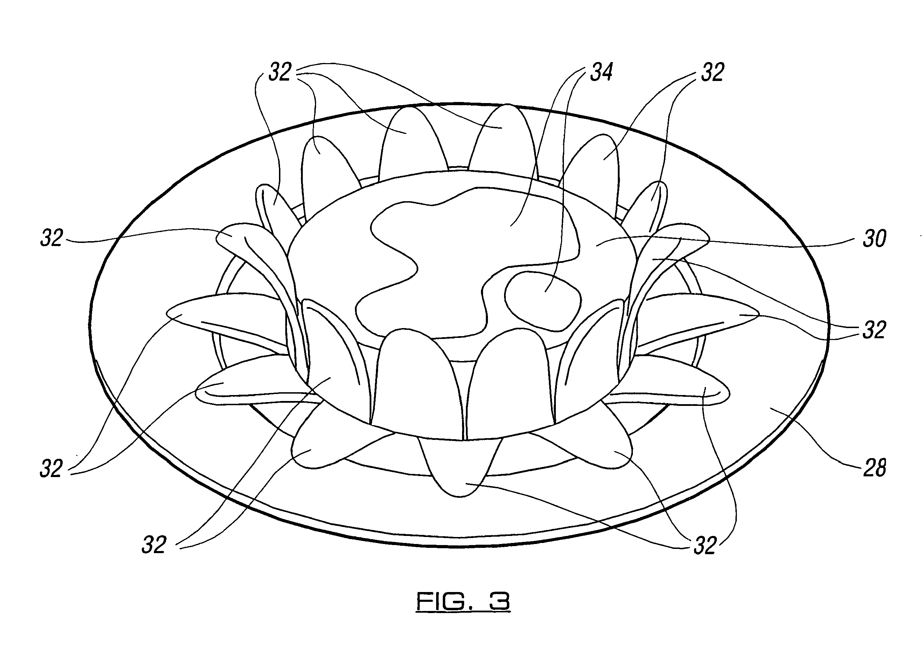

Referring to Figure 4, there is illustrated a further embodiment of a product portion configuration on a plate 28. The product configuration comprises an ice cream disc 30 decorated by a plurality of shaped biscuits 32. Sauce 34 is poured on the product configuration in a user defined pattern.

The ice cream shape or shapes are typically formed by extrusion of the ice cream but the shape(s) can also be produced by stamping or by using other conventional techniques.

The ice cream can be extruded to form any number of different shapes and the illustrated examples show just a few designs of many possible designs. The shapes can be placed together to form a predefined assembled product configuration according to instructions provided with the kit and/or the shapes can be placed together to form an assembled product configuration determined by the user.

A particular ice cream kit can contain a plurality of different shapes or similar shapes of the same and/or different flavours. The other food products provided in the kit with the ice cream shapes can comprise any or any combination of sponge based products and/or biscuits, as in the illustrated examples, but other food products such as pastries, fruit, chocolate and the like can also be provided. Sauce or sauces can be provided with the kit and can be poured in a predefined pattern or a pattern defined by the user on the assembled design.

Examples of dessert kits can include a fudge brownie dessert kit wherein a fudge brownie is assembled with different flavours of shaped ice cream to form a product configuration. A chocolate fudge sauce is then poured on the product configuration to produce a pattern. A further example includes a raspberry dessert kit where a meringue is assembled with a particular flavour of shaped ice cream to form a product configuration and then raspberries are added to create a particular pattern.

It can be seen that the present invention provides a food kit including shaped frozen food components to enable a user to easily and quickly produce an original dessert product configuration by interlinking the food components in a particular orientation.

## Claims

1. A kit for producing a user assembled food product and wherein the kit includes a plurality of shaped frozen food components (12,14) and at least one bakery produce component (16), a plurality of said frozen food components shaped such that a number of said components can be selected by the user and configured in combination with said at least one bakery produce component to form a portion of the food product, **characterised in that** the kit is provided as a retail package in the form of a container having a number of separate compartments with different food components and/or food component shapes therein and at least one of the compartments is removable so as to allow defrosting of certain food components prior to consumption such that the components can be consumed at different temperatures or in different conditions.

2. A kit according to claim 1 **characterised in that** the plurality of shaped frozen food components include at least one ice cream based component and/or a sorbet and/or a frozen yoghurt and/or other frozen material based component.

3. A kit according to claim 1 **characterised in that** the kit includes a number of frozen food components split into groups of the components of the same shape.

4. A kit according to claim 1 **characterised in that** the kit has sufficient components to allow one food product to be provided in a number of different user selectable and assembly configurations.

5. A kit according to claim 1 **characterised in that** the kit comprises a number of components to allow the user to assemble a number of products, each with the same configuration.

6. A kit according to claim 1 **characterised in that** the bakery product component is any or any combination of a sponge based product, biscuits, pastry, and/or meringue.

7. A kit according to any preceding claim **characterised in that** the kit includes one or more sauces to allow a user to pour the same onto the product in a user defined pattern.

## Patentansprüche

1. Set zum Herstellen eines von einem Benutzer zusammengestellten Lebensmittels, wobei das Set eine Mehrzahl von formgestalteten gefrorenen Speisekomponenten (12,14) und wenigstens eine Backwarenkomponente (16) aufweist, wobei eine Mehrzahl der genannten gefrorenen Speisekomponenten so formgestaltet ist, dass eine Anzahl der genannten Komponenten vom Benutzer ausgewählt und in Kombination mit der genannten wenigstens einen Backwarenkomponente zum Bilden einer Portion des Lebensmittels konfiguriert werden kann, **dadurch gekennzeichnet, dass** das Set als Einzelhandelspackung in der Form eines Behälters mit einer Anzahl von separaten Fächern mit verschiedenen Speisekomponenten und/oder Speisekomponentenformen darin bereitgestellt wird und wenigstens eines der Fächer herausnehmbar ist, um das Auftauen gewisser Speisekomponenten vor dem Verzehr zu ermöglichen, sodass die Komponenten bei verschiedenen Temperaturen oder in verschiedenen Zuständen verzehrt werden können.

2. Set nach Anspruch 1, **dadurch gekennzeichnet, dass** die Mehrzahl von formgestalteten gefrorenen Speisekomponenten wenigstens eine auf Speiseeis basierende Komponente und/oder ein Sorbet und/oder einen gefrorenen Joghurt und/oder eine auf anderem gefrorenem Material basierende Komponente aufweist.

3. Set nach Anspruch 1, **dadurch gekennzeichnet, dass** das Set eine Anzahl von gefrorenen Speisekomponenten aufweist, die in Gruppen von Komponenten derselben Gestalt unterteilt ist.

4. Set nach Anspruch 1, **dadurch gekennzeichnet, dass** das Set ausreichend Komponenten hat, um das Bereitstellen eines Lebensmittels in einer Anzahl von verschiedenen vom Benutzer auswählbaren und zusammenstellbaren Konfigurationen zu ermöglichen.

5. Set nach Anspruch 1, **dadurch gekennzeichnet, dass** das Set eine Anzahl von Komponenten umfasst, so dass der Benutzer eine Anzahl von Produkten zusammenstellen kann, die jeweils die gleiche Konfiguration haben.

6. Set nach Anspruch 1, **dadurch gekennzeichnet, dass** das wenigstens eine Backwarenprodukt jedes beliebige oder jede beliebige Kombination von Folgendem ist: ein Produkt auf Biskuitbasis, Kekse, Gebäckstück und/oder Meringe.

7. Set nach einem der vorhergehenden Ansprüche, **dadurch gekennzeichnet, dass** das Set eine oder mehrere Saucen aufweist, damit ein Benutzer diese in einem vom Benutzer definierten Muster auf das Produkt gießen kann.

## Revendications

1. Kit pour réaliser un produit alimentaire à assembler par un utilisateur/une utilisatrice, le kit comprenant une pluralité d'éléments préformés surgelés (12,14) et au moins un élément produit en boulangerie/pâtisserie (16), une pluralité desdits éléments surgelés étant préformés de sorte que l'utilisateur peut en sélectionner un certain nombre et les configurer en les combinant avec ledit au moins un élément produit en boulangerie/pâtisserie pour former une portion du produit alimentaire, **caractérisé en ce que** le kit est fourni conditionné pour la vente aux clients sous forme d'un contenant ayant plusieurs compartiments séparés qui contiennent divers éléments alimentaires et/ou diverses formes d'éléments alimentaires, au moins un des compartiments étant amovible de façon à permettre de décongeler certains des éléments alimentaires avant la consommation, de sorte que les éléments puissent être consommés à des températures différentes ou dans des conditions différentes.

2. Kit selon la revendication 1, **caractérisé en ce que** la pluralité d'éléments alimentaires surgelés préformés comprend au moins un élément à base de crème glacée et/ou de sorbet et/ou de yaourt surgelé et/ou d'un autre élément à base de matière surgelée.

3. Kit selon la revendication 1, **caractérisé en ce que** le kit comprend plusieurs éléments alimentaires surgelés répartis en groupes d'éléments de la même forme.

4. Kit selon la revendication 1, **caractérisé en ce que** le kit comprend plusieurs éléments qui permettent de créer plusieurs configurations à sélectionner et à assembler par l'utilisateur/l'utilisatrice.

5. Kit selon la revendication 1, **caractérisé en ce que** le kit comprend plusieurs éléments qui permettent à l'utilisateur/l'utilisatrice d'assembler plusieurs produits ayant tous la même configuration.

6. Kit selon la revendication 1, **caractérisé en ce que** l'élément produit en boulangerie/pâtisserie est l'un quelconque, ou une combinaison de : gâteau de Savoie, pâte sablée, pâte à pâtisserie ou meringue.

7. Kit selon l'une quelconque des revendications précédentes, **caractérisé en ce que** le kit inclut une ou plusieurs sauces que l'utilisateur peut verser sur le produit en une configuration créée par lui/elle.
